# EUROPEAN PATENT APPLICATION

(11) **EP 2 246 249 A1**
(43) Date of publication of application: **03.11.2010**
(21) Application number: 10250390.1
(22) Date of filing: 04.03.2010
(51) Int. Cl.: B62M 7/02, B62K 5/04, B62K 11/04, F02B 61/02

(54) **Engine configuration**

(30) Priority: 04.03.2009 GB 0903753
(71) Applicant: The Four Wheeled Motorcycle Company Limited, 101 Crofton Way Enfield Middlesex EN2 8HR (GB)
(72) Inventor: Shotter, Nicholas Richard, Enfield Middx EN2 8HR (GB)
(74) Representative: Loveless, Ian Mark

(57) **Abstract**

An engine configuration for motorcycle type vehicles has an engine with at least one reciprocating piston. The cylinder/head 101 extends rearwardly from the crankcase of the engine. The leading arms 116, 118 of a parallelogram front suspension are mounted directly on the crankcase 102 by means of brackets, without the need for a separate frame. The absence of a separate frame reduces weight benefitting acceleration, braking, fuel consumption, tyre wear, and production costs. The rearwardly inclined or horizontal cylinder provides a very compact and structurally strong engine/transmission unit with a very low centre of gravity.

## Description

The invention relates to motorcycle-type vehicles having an engine with at least one reciprocating piston and in particular to an engine configuration for a motorcycle-type vehicle.

An engine configuration in accordance with the invention and preferred forms of the invention are set out in the accompanying claims.

The invention in its preferred embodiments provides an engine/transmission unit that is a very compact with a low centre of gravity and with the provision to directly mount two transversely pivoted leading suspension arms (front swing arms). It is suitable for incorporation in a vehicle with a suspension of the type described in European patent applications 01998472.3 and 03253106.

Where the front swing arms and one or two transversely pivoted rear trailing arms (rear swing arm/s) are simultaneously employed the invention does not need a separate frame because the rear swing arm/s can also be mounted directly to engine assembly, like the front swing arms, in which case the absence of a separate frame reduces weight and lowers the centre of gravity of the vehicle which improves stability, manoeuvrability, braking, acceleration, fuel consumption, tyre wear, and reduces the production costs. Alternatively, any of the swing arms could be mounted to engine assembly via a bracket, which is not a frame fixed to the engine assembly. This may be a preferred arrangement to allow, for instance, the cheaper bracket to bend in an accident rather than more costly components, or for production considerations such as allowing sub assemblies to be made in different locations and at different times from the final assembly. Such brackets would add weight and take up some space but would still be a lot lighter and cheaper than a separate frame and would take up a lot less room than a separate frame.

The invention will now be further described by way of example with reference to the accompanying schematic drawings, in which:
Figure 1 depicts the right side view of a typical motor scooter engine/transmission unit with the exception of the front swing arm mounting lugs which are not typical;
Figure 2 depicts the plan view of the motor scooter engine/transmission of Figure 1;
Figure 3 depicts the right side view of a first embodiment of the invention;
Figure 4 depicts the plan view of the embodiment of Figure 3;
Figure 5 depicts the right side view of a second embodiment of the invention;
Figure 6 depicts the plan view of the embodiment of Figure 5;
Figure 7 depicts the right side view of a modification of the embodiment of Figure 5 with a rearward pointing exhaust;
Figure 8 depicts the right side view of a modification of the embodiment of Figure 7 with alternative exhaust;
Figure 9 depicts the right side view of a modification of the embodiment of Figure 5 with the exhaust port positioned eccentrically to the cylinder/head's vertical plane;
Figure 10 depicts the left side view of the embodiment of Figure 9;
Figure 11 depicts the left side view of the embodiment of Figure 10 with the side cover removed;
Figure 12 depicts a side view of the transfer tube of Figure 11 fashioned as an intercooler;
Figure 13 depicts the right side view of the embodiment of Figure 9 with alternative cylinder/head bolts;
Figure 14 depicts the right side view of a modification of the embodiment of Figure 5 with a structural brace;
Figure 15 depicts the plan view of the embodiment of Figure 14;
Figure 16 depicts the right side view a vehicle incorporating the embodiment of Figure 3 mounted on a suspension arrangement defined by two front transversely pivoted swing arms and one rear transversely pivoted swing arm plus two parallelogram arms mounted on two additional lugs, including an engine brace;
Figure 17 depicts the left side view of the embodiment of Figure 16;
Figure 18 depicts the right side view of a modification of the embodiment of Figure 16 and 17 where the two front swing arms are of an inverted C shape;
Figure 19 depicts the right side view of a modification of the embodiment of Figure 16 in which the engine configuration is as in Figure 5;
Figure 20 depicts the right side view of a modification of the embodiment of Figure 19 but with front swing arms as in Figure 18;
Figure 21 depicts a plan view of the embodiment of Figures 16 and 18;
Figure 22 depicts a plan view of the embodiment of Figures 19 and 20;
Figure 23 depicts the right side view of a modification of the embodiment of Figure 16 with two rear swing arms;
Figure 24 depicts the right side view of a modification of the embodiment of Figure 23 but with front swing arms as in Figure 18;
Figure 25 depicts the right side view of a modification of the embodiment of Figure 19 but with two rear swing arms as with Figure 23;
Figure 26 depicts the right side view of a modification the embodiment of Figure 25 but with front swing arms as in Figure 24;
Figure 27 depicts a plan view of the embodiment of Figures 23 and 24; and
Figure 28 depicts a plan view of the embodiment of Figures 25 and 26.

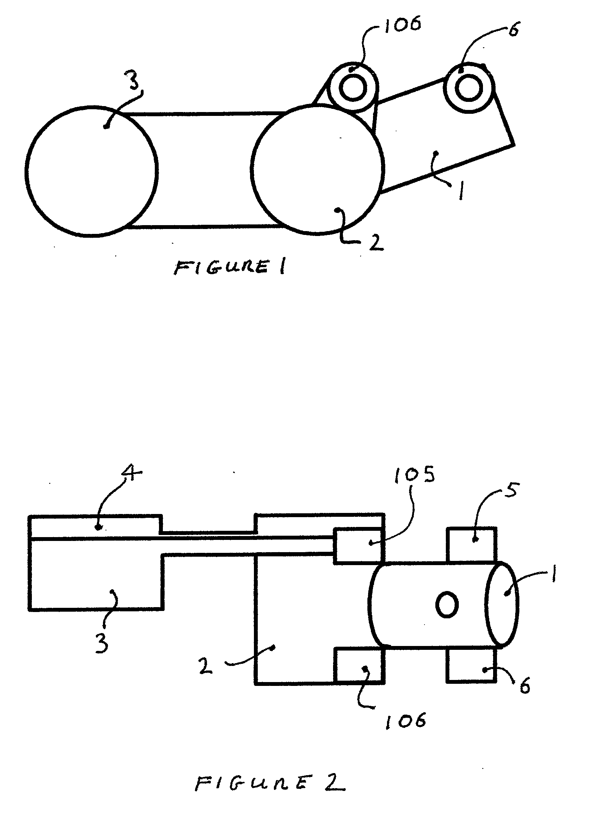

Figures 1 and 2 show a known configuration of engine for a motorcycle-type vehicle designed to give a lower centre of gravity compared with an equivalent engine with a conventional upright cylinder. In Figure 1 the cylinder 1 of the engine is inclined forwardly at an angle of less than 45° to the horizontal, in this example, approximately 15°, so that the centre of gravity of the engine is lower than it would be if the cylinder were vertical. The cylinder/head 1 is connected to the crankcase 2. The crankcase 2 is connected to a housing 3 which contains a drive belt and a variable drive mechanism such as a variator cone ring transmission. The housing 3 has a removable cover 4.

The engine is designed for a vehicle without a frame or chassis in order to save weight. Lugs 5 and 6 represent a mounting location for front swing arms (not shown) of the vehicle suspension. This is not an ideal location for the lug 5 and lug 6 because it would require the cylinder/head 1 to be overly strong to cope with the stresses imposed on it from the front swing arms.

In terms of strength, it would be better to mount the front swing arms directly to the crankcase 2, for instance, in the alternative position represented by lugs 105 and 106. However, the front swing arms would then have to be longer than if mounted on lugs 5 and 6 to provide the vehicle's front wheels with sufficient room to clear the cylinder/head 1 when steered. The longer the front swing arms the heavier their construction would have to be to maintain sufficient rigidity. This increase in weight would have the detrimental effects of increasing the unsprung weight, vehicle weight, and production costs. Also, the longer the front swing arms are, the smaller the design envelope is for the rest of the vehicle within a given wheelbase.

Alternatively, the cylinder/head 1 could be arranged vertically to allow for the lug positions 105 and 106 to be used whilst permitting the shortest possible front swing arms. However, a vertically positioned cylinder/head would raise the vehicle's centre of gravity, and thereby reduce vehicle stability and manoeuvrability, as well as not being very compact taking up room that could be used for other purposes.

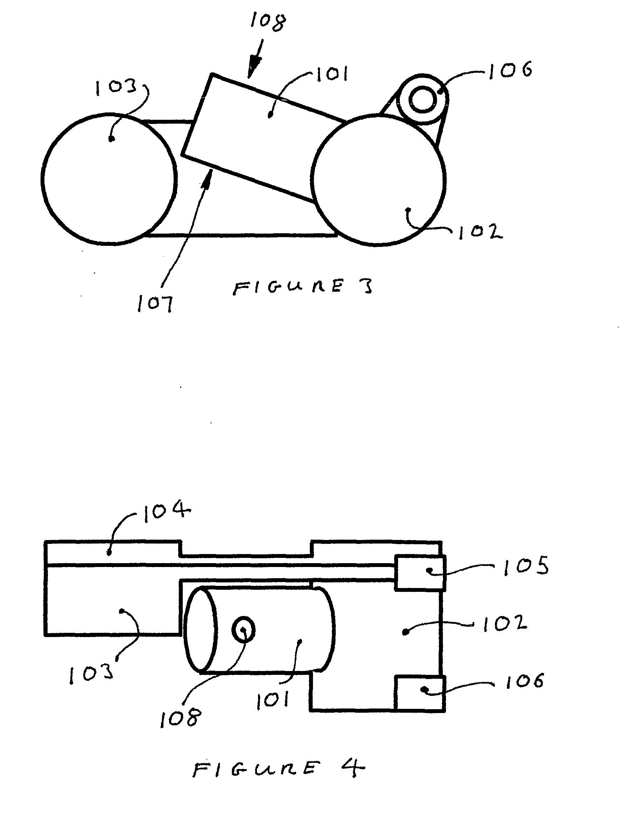

Figures 3 and 4 show a first embodiment of the invention in which the cylinder 101 is inclined rearwardly from the crankcase 102. In the example, the cylinder is inclined at an angle of less than 30° to the horizontal, preferably 15° or less. The cylinder/head 101 substantially takes up the gap between the crankcase 102 and the rear portion of the housing 103 that accommodates the variator mechanism. The housing 103 and the cover 104 are longer than their counterparts 3 and 4 in Figure 1 and Figure 2 to accommodate the cylinder 101. However, the overall length of the engine/transmission unit in Figure 3 and Figure 4 is considerably shorter than the engine/transmission unit in Figure 1 and Figure 2. This configuration combines the preferred locations of the lugs 105 and 106 on the crankcase of the engine, and the shortest possible front swing arms (not shown), with a very low centre of gravity in a compact engine/transmission unit. The lengthened housing 103 might require a lengthened drive belt too. If so, this longer drive belt would run cooler and last longer than its shorter counterpart in Figure 1 and Figure 2. In the embodiment of Figure 3, the air inlet could be at 108, and in the exhaust could be at 107.

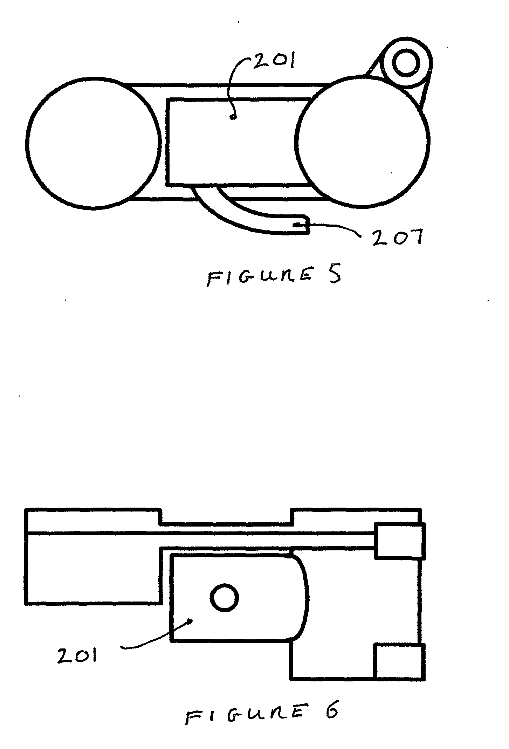

Figures 5 and 6 show a second embodiment of the invention in which the cylinder/head 201 extends rearwardly from the crankcase 202 in a substantially horizontally plane to achieve the lowest centre of gravity and the most compact design. However, this configuration may not provide sufficient ground clearance for the downwardly directed exhaust 207.

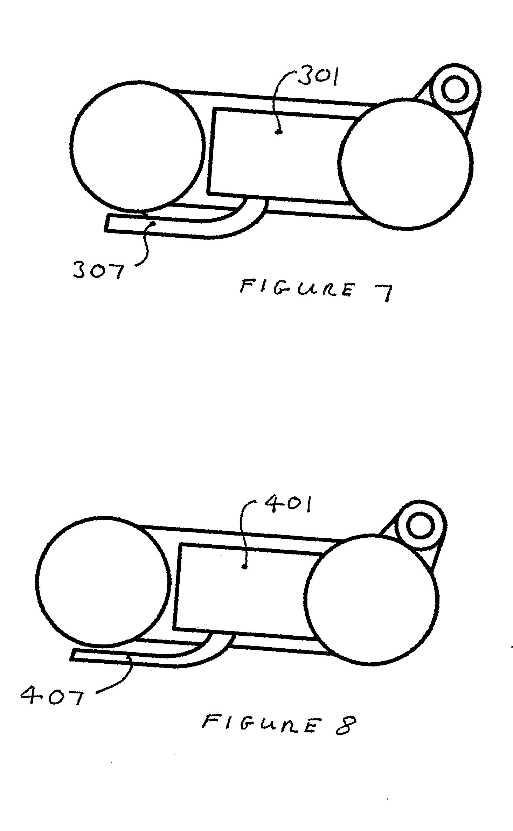

Figure 7 shows a modification of the embodiment of figures 5 and 6 in which the centrally positioned exhaust 307 is exiting rearwards from cylinder 301. Thereby, the possible exhaust/ground clearance issue will be minimised by the central position of exhaust 307 and its close proximity to the rear wheel/s (not shown).

To further minimise the exhaust/ground clearance issue the exhaust 407 of the embodiment of Figure 8 has a flattened or oval cross section at its rear portion 418 whereby its width is greater than its height whilst maintaining the required cross sectional area for suitable exhaust flow. The exhaust tract for exhaust 407 could progressively change from being round adjacent the exhaust valves to the flattened cross sectional shape at its rearward portion 418. This transition from circular section to flattened section could be completed within the cylinder/head 401 or continue in exhaust 407 or be solely in exhaust 407 from a circular section at the forward end 419 to the flattened rearward portion 418.

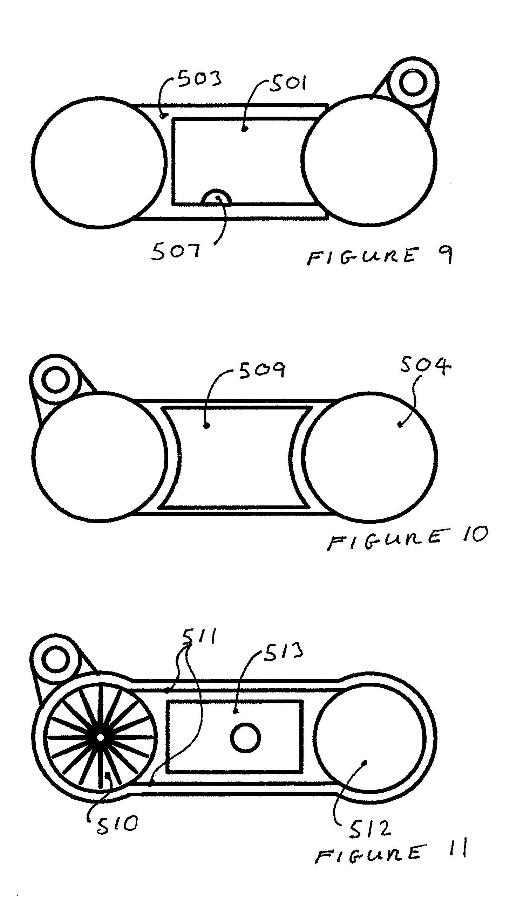

In the embodiments of Figures 9, 10 and 11, the exhaust 507 exits to one side of the cylinder 501. The air could also be drawn into the cylinder 501 from one side, for instance, through the housing 503. To prevent debris from the drive belt etc entering the engine, the air intake would have to be separate from the air space within the housing 503.This would require a transfer tube to bridge the internal space within housing 503. The engine's air supply is drawn through a filter 509 (see figure 10) and then through a transfer tube 513 before entering the cylinder/head 501.

Figure 11 shows the embodiment of figure 10 with the cover 504 removed. This reveals the variable drive mechanism comprising a front variator/fan 510, a drive belt 511, a rear variator 512, and the transfer tube 513.

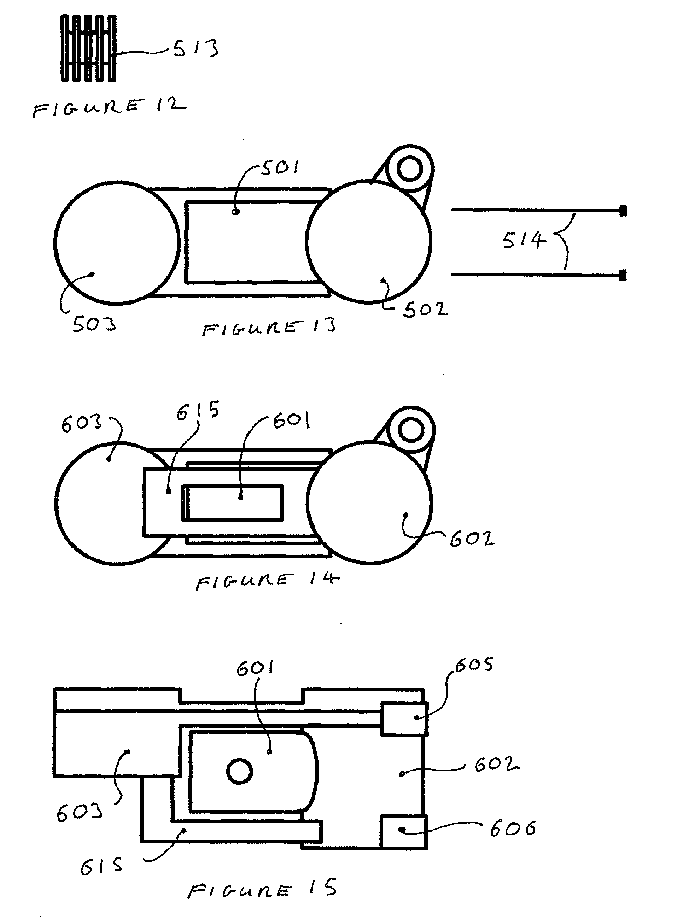

As shown in Figure 12, the transfer tube 513 has cooling fins to act as a rudimentary intercooler. In addition to cooling the variable drive mechanism the variator/fan 510 would also cool the transfer tube 513. The overall heat that the variator/fan has to remove by comparison to its counterpart in Figures 1 and 2 will depend on how much cooler the drive belt 511 in Figure 11 is compared with its counterpart in the embodiment of figure 1 and 2 due to its longer length.

The engine assembly could include a second crankshaft driven fan to act as a supercharger to force air into the inlet tract. If the variator/fan 510 and supercharger fan were mounted together on the same side of the crankshaft as the housing 503 but with independent air passages, a supercharger, intercooler, and variable drive cooling would be simultaneously achieved within a very compact space. If the engine was air cooled, instead of liquid cooled, then after the air flow from variator/fan 510 had been ducted around housing 503 it could exit housing 503 into a cowling surrounding cylinder/head 501 to cool the engine. In this instance the slightly preheated air from housing 503 would not be detrimental to the engine's cooling. This is because air cooled vehicle's have performed very well in very hot places such as the Sahara Desert and it is very unlikely that the preheated air from housing 503 will exceed the air temperature of the Sahara Desert.

Using Figure 13 as an example, to remove the substantially horizontal cylinder/head 501 crankcase 502 would first have to be separated from housing 503. Alternatively, crankcase 502 could be unbolted from housing 503 and rotated until cylinder/head 501 had sufficient clearance for removal then re-bolted to housing 503 whilst work on cylinder/head 501 was done. Alternatively, as indicated in figure 13, the cylinder head bolts 514 could be reverse mounted so that they screw in from crankcase 502, through the cylinder wall and into the cylinder head. Once the bolts 514 are removed, the cylinder/head 501 can be removed without moving crankcase 502 in relation to housing 503. In this situation the holes in which bolts 514 run would have to be separated from the engine's oil and coolant galleries to avoid oil and coolant loss and contamination.

Where, as shown in Figure 3 for example, the inlet port 108 is located directly on top of the cylinder and the exhaust port 107 is located directly below the cylinder, the inlet and outlet valves can conveniently be driven from the camshaft by overhead cam/s belt/chain drive. The same would be the case if the exhaust port were instead at 108 and the inlet port were instead at 107. To accommodate the exhaust port 507 or/and an inlet port exiting from the side of cylinder/head 501 in Figure 9, for example, the inlet or/and exhaust tracks could be formed in the cylinder/head 501. In the case where the inlet or/and exhaust port/s are substantially positioned to the side of cylinder/head 501 a different valve operation method may be required such as bevel geared.

In the embodiment of Figures 14 and 15 there is a brace 615 between crankcase 602 and housing 603 on the opposite side of the cylinder to the drive belt to prevent the housing 603 flexing unduly.

The transmission in the embodiments so far described has referred to the variable drive belt type but types of transmission may be used with the invention such as for example, the conventional gearbox type with static ratios, or the hydraulic swash plate pump, or a generator with electric motor/s.

The engine referred to may have one or more cylinder/head/s 201 positioned, for example, as in Figure 5. Where a cylinder/head lays substantially flat as per 201 in Figure 5 the cylinder liner could extend into the crankcase 202, as per aero radial engine technology, to prevent the circulating oil pooling in the cylinder liner when the engine has stopped.

It is intended that the invention incorporates either a wet sump or a dry sump with the latter either having an oil tank integral with its crankcase or remotely positioned from its crankcase. A dry sump engine would further promote a low centre of gravity.

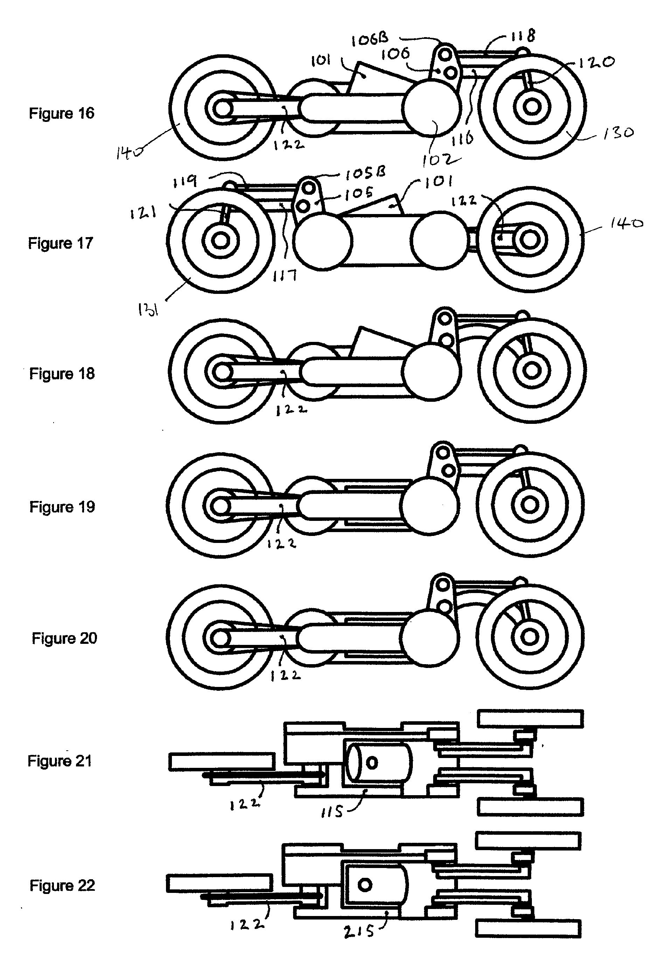

Figures 16 to 28 show possible engine configurations in a three- and four-wheeled motorcycle-type vehicles, the front two wheels being mounted on separate parallelogram suspensions.

In order to provide the upper mounting point for the upper suspension arms, as shown In Figures 16 and 17, the lug 106 is accompanied by additional lug 106B positioned above the lug 106 and the lug 105 is accompanied by additional lug 105B above the lug 105. Lugs 106 and 105 define a first transverse axis. Lugs 106B and 105B define a second transverse axis. Any or all of the four lugs can be integral with the engine unit 101. Any or all of the four lugs can be mounted to the engine 101 via a bracket.

As can be seen in Figure 16, the suspension for the right hand front wheel 130 consists of a parallelogram suspension including a lower front swing arm 116 mounted to the lug 106 for rotation about the first transverse axis and an upper arm 118 mounted to the lug 106B for rotation about the second transverse axis.. As can be seen in Figure 17 the suspension for the left hand front wheel 131 consists of a similar parallelogram suspension including a lower front swing arm 117 mounted to lug 105 for rotation about the first transverse axis and an upper front swing arm 119 mounted to lug 105B for rotation about the second transverse axis. The forward end of swing arm 116 and the forward end of parallelogram arm 118 remote from their respective lugs 106 and 106B are articulated to an upright member 120. The forward end of swing arm 117 and the forward end of parallelogram arm 119 that are remote from their respective lugs 105 and 105B are articulated to an upright member 121. Thereby the two swing arms 116 and 117 and two parallelogram arms 118 and 119 and two uprights 120 and 121 form two quadrilateral or parallelogram suspension/steering arrangement similar to that disclosed in our European patent applications 01998472.3 and 03253106.3. As can be seen from the drawings, by directing the cylinder 101 towards the rear, the suspension arms can be mounted on the crankcase and the front wheels have clearance to turn without the suspension arms being unduly long.

Figures 16 to 22 inclusive, show a single rear swing arm 122 forming the rear suspension for the single rear wheel 140 of a three wheeled vehicle with an engine configuration in accordance with the invention. The rear swing arm 122 is pivoted about a third transverse axis. The third transverse axis maybe concentrically or eccentrically aligned with the transmission's output shaft.

Figure 21 and Figure 22 show the engine brace 115 and 215 respectively also partially or totally provide the rotatable mounting for the rear swing arm 122. The direct attachment of a single rear swing arm to the transmission is otherwise well know in the design of two wheeled motorcycle type vehicles and therefore does not need further documenting.

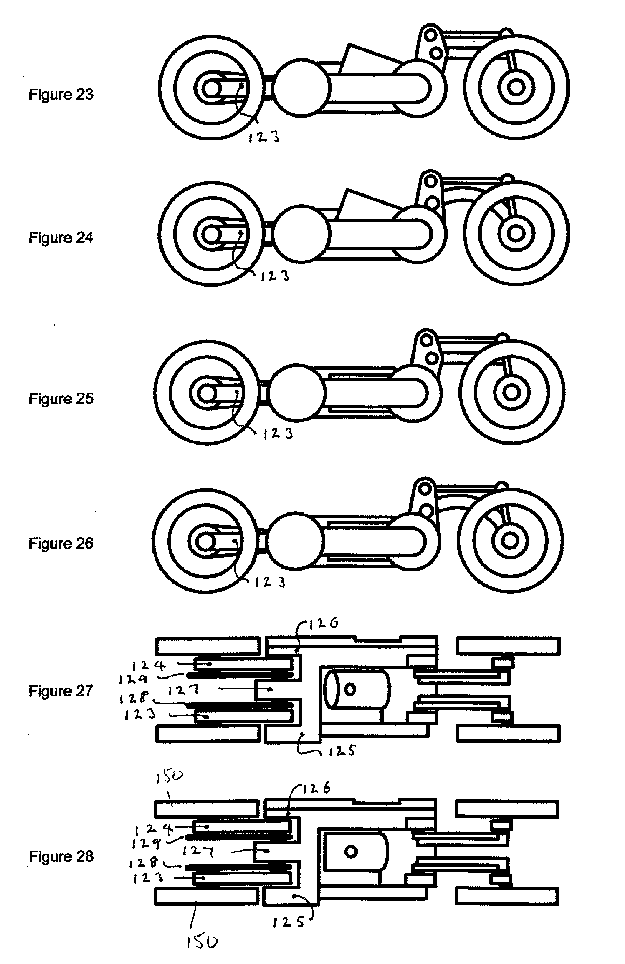

Figures 23 to 28 inclusive show a four-wheeled motorcycle type vehicle which include two rear swing arms 123 and 124 which form the rear suspension for the rear wheels 150 of the vehicle. Figure 27 and Figure 28 show the two rear swing arms 123 and 124 where rear swing arm 123 is rotatably mounted to lug 125 and rear swing arm 124 is rotatably mounted to lug 126. The two rear swing arms 123 and 124 are rotatably mounted about a common third transverse axis. The third transverse axis maybe concentrically or eccentrically aligned with the transmissions output shafts.

A differential 127 may lay between the two drive chains/belts 128 and 129 as shown in Figure 27 and Figure 28.

Figure 18 shows the same front suspension arrangement for two wheels as shown in Figure 16 and Figure 17 but instead with both front swing arms upwardly curved in an inverted C shape to provide clearance for the back of the front wheels when turning.

It is intended that the invention also includes inverted U or J shaped front swing arms to also provide clearance for the back of the front wheels when turning.

The Figures contain sufficient detail for one skilled in the art to understand the invention. Therefore the Figures do not include all the steering components, or seat or lights etc. The figures are non limiting examples.

The invention can be further described with reference to the following numbered clauses:
1. An engine configuration for motorcycle type vehicles having at least one rearward pointed and substantially horizontal cylinder/head for a reciprocating piston, where the crankcase has means for the direct mounting of two leading suspension arms.
2. An engine configuration for motorcycle type vehicles having at least one rearward pointed and substantially inclined cylinder/head for a reciprocating piston, where the crankcase has means for the direct mounting of two leading suspension arms.
3. An engine configuration according to any of the preceding clauses, where the housing has means for the direct mounting of one trailing suspension arm.
4. An engine configuration according to any of the clause 1 or 2, where the housing has means for the direct mounting of two trailing suspension arms.
5. An engine configuration according to any of the preceding clauses, where any of the leading suspension arms can be mounted to the crankcase via a bracket.
6. An engine configuration according to any of the clauses 3 to 5, where any of the trailing suspension arms can be mounted to the housing via a bracket.
7. An engine configuration according to any of the preceding clauses, where the cylinder/head is connected via reverse bolts.
8. An engine configuration according to any of the preceding clauses, where a structural brace interconnects the crankcase and housing.
9. An engine configuration according to any of the preceding clauses, where the exhaust exits rearward.
10. An engine configuration according to any of the preceding clauses, where the cross section of the exhaust is wider than its height.
11. An engine configuration according to any of the preceding clauses, where the engine's air supply is drawn through the housing.
12. An engine configuration according to clause 11 where an air transfer tube has been fashioned into an intercooler.
13. An engine configuration according to any of the preceding clauses, where a supercharger is driven by the same shaft that drives a variator/fan.
14. An engine configuration according to any of the preceding clauses that has a dry sump engine with or without an integral crankcase housed oil tank.
15. An engine configuration according to any of the clauses 1 to 13 that has a wet sump engine.
16. An engine configuration according to any of the preceding clauses that is substantially air cooled.
17. An engine configuration according to any of the clauses 1 to 15 that is substantially liquid cooled.
18. An engine configuration according to any of the preceding clauses that has a variable drive transmission.
19. An engine configuration according to any of the clauses 1 to 17 that has a transmission with static ratios.
20. An engine configuration according to any preceding clause that incorporates a differential.
21. An engine assembly for a motorcycle-type vehicle comprising a crankcase and at least one cylinder, the crankcase having at its forward-facing side means for mounting two leading suspension arms, the or each cylinder extending rearwardly from the crankcase.
22. An engine assembly according to clause 21 wherein the rearwardly extending cylinder is inclined to the horizontal.
23. An engine assembly according to clause 22 in which the rearwardly-extending cylinder is inclined at an angle of less than 45° to the horizontal.
24. An engine assembly according to clause 21 in which the rearwardly extending cylinder is substantially horizontal.
25. An engine assembly according to any of g clauses 21 to 24 including a transmission housing coupled to the engine, the housing having means for the direct mounting of at least one trailing suspension arm.
26. An engine assembly according to clauses 25, wherein the housing has means for the direct mounting of two trailing suspension arms.
27. An engine configuration according to clause 25 or 26, wherein the means for mounting the or each trailing suspension arm comprise a bracket on the housing.
28. An engine assembly according to any of clause 21 to 27, wherein the means for mounting the two leading suspension arms comprise brackets on the crankcase.
29. An engine assembly according to any of clauses 21 to 28 wherein the cylinder/head is connected to the engine by bolts which pass through the crankcase and through the cylinder wall to the cylinder/head.
30. An engine assembly according to any of clauses, 21 to 29 including a transmission housing and a structural brace interconnects the crankcase and the housing.
31. An engine configuration according to any of clauses 21 to 30 including an exhaust, the exhaust exits rearwardly from the engine.
32. An engine configuration according to clause 31 wherein the cross-section of at least the rearward portion of the exhaust is wider than it is high.
33. An engine configuration according to any of clauses 21 to 32 including a transmission housing, wherein the air intake for the engine passes through the housing.
34. An engine configuration according to clause 33 in which the air intake includes an air transfer tube with fins to serve as an intercooler.
35. An engine configuration according to any of clauses 21 to 34 including, a variator/fan and a supercharger, the variator/fan and the supercharger being driven by a common drive shaft.
36. An engine configuration according to any of clauses 21 to 35 that has a dry sump engine with or without an integral crankcase-housed oil tank.
37. An engine configuration according to any of the clauses 21 to 35 that has a wet sump engine.
38. An engine configuration according to any of clauses 21 to 37 in which the engine is substantially air cooled.
39. An engine configuration according to any of the clauses 21 to 37 in which the engine is substantially liquid cooled.
40. An engine configuration according to any of clauses 21 to 39 including a variable drive transmission.
41. An engine configuration according to any of the clauses 21 to 39 including a transmission with static ratios.
42. An engine configuration according to any of clauses 21 to 41 including a differential.
43. A motorcycle type vehicle with an engine configuration according to any of clauses 1 to 42.
44. An engine configuration substantially as hereinbefore described with reference to figures 3 to 15 of the accompanying drawings.
45. A motorcycle type vehicle substantially as hereinbefore described with reference to figures 16 to 28 of the accompanying drawings.

## Claims

1. An engine assembly for a motorcycle-type vehicle comprising a crankcase (102) and at least one cylinder (101), the crankcase (102) having means (105 and 106) for mounting two leading suspension arms, **characterised in that** the or each cylinder (101) extends rearwardly from the crankcase (102).

2. An engine assembly according to claim 1 wherein the or each rearwardly-extending cylinder (101) is inclined to the horizontal.

3. An engine assembly according to claim 2 in which the or each rearwardly-extending cylinder (101) is inclined at an angle of less than 45° to the horizontal.

4. An engine assembly according to claim 1 in which the rearwardly-extending cylinder (201) is substantially horizontal.

5. An engine assembly according to any of claims 1 to 4 including a transmission housing (103) coupled to the engine, the housing having means for the direct mounting of at least one trailing suspension arm (122).

6. An engine assembly according to claims 5, wherein the housing has means (125 and 126) for the direct mounting of two trailing suspension arms (123 and 124).

7. An engine configuration according to claim 5 or 6, wherein the means for mounting the or each trailing suspension arm (123 and 124) comprise a bracket on the housing.

8. An engine configuration according to claim 5 or 6, wherein the means for mounting the, or each, trailing suspension arm comprise a structural brace (615) interconnecting the crankcase (602) and the housing (603).

9. An engine assembly according to any of claims 1 to 8, wherein the means for mounting the two leading suspension arms comprise brackets on the crankcase.

10. An engine assembly according to any of claims 1 to 8 wherein the cylinder is connected to the engine by bolts (514) which pass through the crankcase (502) and through the cylinder wall to the cylinder head (501).

11. An engine configuration according to any of claims 1 to 11 including a transmission housing (503), wherein the air intake for the engine passes through the housing.

12. An engine configuration according to claim 11 in which the air intake includes an air transfer tube (513) with fins to serve as an intercooler.

13. An engine configuration according to any of claims 1 to 12 including, a variator/fan (510) and a supercharger, the variator/fan and the supercharger being driven by a common drive shaft.

14. An engine configuration according to any of claims 1 to 13 including a variable drive transmission or a transmission with static ratios.

15. A motorcycle type vehicle having two front wheels(130 and 131), two leading suspension arms (116 and 117) and an engine configuration according to any of claims 1 to 14, the rearward ends of the suspension arms (116 and 117) being attached to the crankcase (102) by the mounting means (105 and 106) and each front wheel (103 and 131) being mounted to support the front end of a respective one of the leading suspension arms (116 and 117).
